# DEMANDE DE BREVET EUROPEEN

(11) **EP 4 534 759 A1**
(43) Date de publication de la demande: **09.04.2025**
(21) Numéro de dépôt: 24203609.3
(22) Date de dépôt: 30.09.2024
(51) Int. Cl.: E01H 11/00, A01D 34/86

(54) **SYSTEME DE FAUCHAGE ROBOTISE DE LA VEGETATION D'UNE VOIE FERROVIAIRE, VEHICULE D'ENTRETIEN ET PROCEDE ASSOCIE**

(30) Priorité: 04.10.2023 FR 2310614
(71) Demandeur: Société Nationale SNCF, 93200 Saint Denis (FR)
(72) Inventeur: JOLY, Louis-Romain, 60270 Gouvieux (FR)
(74) Mandataire: Bringer IP

(57) **Abrégé**

L'invention concerne un système de fauchage robotisé de la végétation présente sur une voie ferrée présentant des rails agencés sur une surface ferroviaire, ladite voie présentant une zone centrale s'étendant entre les rails et deux zones latérales agencées de part et d'autre des rails le long de ladite zone centrale, ledit système comprenant au moins une barre principale ; des moyens de détection de la surface ferroviaire et des obstacles présents sur la voie ferrée ; une pluralité d'organes de coupe montés chacun mobile en translation par rapport à ladite barre principale et une unité de commande configurée pour ajuster la hauteur de coupe de chaque organe de coupe en fonction de la surface ferroviaire et des obstacles présents sur la voie ferrée, l'invention concerne également un véhicule d'entretien équipé d'un tel système et un procédé associé.

## Description

### Domaine technique de l'invention

L'invention concerne le domaine de la maitrise de la végétation sur et aux abords des voies ferroviaires à l'aide d'un dispositif de fauchage robotisé. Plus particulièrement, l'invention a trait à un système de fauchage robotisé de la végétation présente sur une voie ferroviaire ainsi qu'à un procédé de gestion du fauchage de la voie ferroviaire et à un véhicule d'entretien ferroviaire équipé d'un tel système de fauchage.

### Arrière-plan technologique

Les voies de chemin de fers doivent faire l'objet d'entretien et de contrôles réguliers afin d'assurer la sécurité et le bon état des voies de circulation ferroviaires.

Dans la plupart des cas, ces voies comprennent une surface ferroviaire, pouvant être ballastée ou encore dallée. Le ballast correspond à une couche de pierres et/ou de graviers étendue le long du cheminement d'une voie ferroviaire et comprenant les traverses et les rails ferroviaires. Le ballast a notamment pour objectif le maintien en position des traverses et des rails lorsqu'ils sont soumis aux contraintes mécaniques lors du passage des véhicules ferroviaires, ils permettent le transfert et la répartition de ces contraintes mécaniques vers le sol, facilitent le drainage des eaux de pluies sur la voie, et agissent comme un obstacle temporaire à la colonisation végétale.

Toutefois, et malgré la présence du ballast, la végétation peut subsister et se développer avec le temps aux abords des rails ainsi que dans la zone inter-rail. Le débroussaillage manuel étant long et fastidieux, des solutions ont été développées pour le fauchage des voies ferroviaires.

De nos jours, les débroussailleuses rail-route sont largement utilisées pour les abords de la voie. Cependant, la mise en oeuvre de tels engins est lourde. En outre, bien que le fauchage sur les bords externes de la voie puisse être effectué de manière plus aisée que le fauchage de la zone inter-rails, celui-ci reste grossier et ne donne pas entière satisfaction.

De surcroît, et dans le cadre d'une utilisation pour la zone inter-rails, les moyens communément employés comprennent des barres de fauchage munies d'éléments tranchant à hauteur fixe. De ce fait, lorsqu'un obstacle est présent même sur une petite portion de la largeur de voie, la barre nécessite d'être soulevée dans son intégralité. Ce n'est donc qu'au prix de longues manoeuvres que la voie peut être traitée plus finement.

Les moyens connus pour le fauchage des voies ferroviaires ne permettent pas non plus de traiter de façon simultanée le centre de la voie, désigné ci-après zone inter-rails, et les côtés de la voie, désignés ci-après zones latérales.

Les dispositifs de fauchage mécanisés actuels ne permettent pas de traiter finement le désherbage. En effet, sur certaines voies de chemins de fer et notamment sur les voies de service, la surface supérieure du ballast peut être très irrégulière. Le ballast peut de ce fait se trouver à hauteur des patins des rails, au droit de ces derniers mais il peut également constituer des monticules ou des dépressions dans la zone inter-rails. Le traitement de l'ensemble de la section de la voie à la hauteur la plus haute laisse la voie libre à une colonisation par la végétation pouvant rester importante. Traiter l'ensemble de la végétation avec une hauteur de coupe intermédiaire risque d'engendrer la casse des outils de coupe en cas de choc avec un obstacle sur la voie.

Enfin, le débroussaillage chimique est une alternative utilisable mais néanmoins pas toujours efficace dans la mesure où elle ne permet pas un traitement rapide et instantané d'une végétation dense et déjà bien installée. En outre, il subsiste des inconvénients écologiques et logistiques par rapport à la quantité de produit à transporter et à appliquer.

Les inventeurs ont donc cherché une solution pour pallier les inconvénients des solutions actuelles de fauchage des voies ferroviaires.

### Objectifs de l'invention

L'invention vise à fournir, dans au moins un mode de réalisation un système de fauchage robotisé permettant le désherbage fin sur et aux abords d'une voie ferroviaire.

L'invention vise aussi à fournir, dans au moins un mode de réalisation, un système de fauchage équipé d'un moyen de détection des obstacles et des irrégularités présentes sur une voie ferroviaire.

L'invention vise aussi à fournir, dans au moins un mode de réalisation un système de fauchage comprenant une pluralité d'éléments de coupe avec une partie mobile rétractable.

L'invention vise aussi à fournir, dans au moins un mode de réalisation, un système de fauchage permettant le désherbage simultané des zones inter-rails et des zones latérales.

L'invention vise aussi à fournir, dans au moins un mode de réalisation, un système de fauchage limitant les risques de casse des éléments de coupe.

L'invention vise aussi à fournir, dans au moins un mode de réalisation, un système comprenant des éléments de coupe compacts et allégés.

L'invention vise aussi à fournir dans au moins un mode de réalisation, un procédé de gestion du fauchage de la végétation d'une voie ferroviaire à l'aide d'un système de fauchage robotisé.

L'invention vise aussi à fournir, dans au moins un mode de réalisation, un véhicule d'entretien ferroviaire équipé d'un système de fauchage robotisé.

L'invention vise aussi à fournir, dans au moins un mode de réalisation un système de fauchage permettant d'optimiser et de faciliter le fauchage des voies ferrées pendant et après le fauchage.

L'invention vise aussi à fournir, dans au moins un mode de réalisation un système de fauchage robotisé dont les organes de coupes sont répartis le long d'une barre transversale.

L'invention vise aussi à fournir un système de fauchage robotisé facilitant la maintenance effectuée par un opérateur.

### Exposé de l'invention

Pour ce faire, l'invention concerne un système de fauchage robotisé de la végétation présente sur au moins une portion d'une voie ferrée présentant des rails agencés sur une surface ferroviaire, ladite voie présentant en outre une zone centrale s'étendant entre les rails et deux zones latérales agencées de part et d'autre des rails le long de ladite zone centrale, ledit système comprenant :
- au moins une barre principale s'étendant transversalement au-dessus de la zone centrale de la voie ferrée, une fois le système agencé au-dessus des rails, et comprenant deux extrémités configurées pour s'étendre au-dessus des zones latérales de ladite voie ferrée ;
- des moyens de détection de la surface ferroviaire et des obstacles présents sur la voie ferrée ;
- une pluralité d'organes de coupe montés chacun mobile en translation par rapport à ladite barre principale, ladite pluralité d'organes de coupe étant répartie le long de ladite barre ;
- une unité de commande configurée pour ajuster la hauteur de coupe de chaque organe de coupe par rapport à la surface ferroviaire et en fonction des obstacles présents sur ladite portion de voie ferrée et détectés par lesdits moyens de détection.

Dans tout le texte, on entend que le système selon l'invention comprend au moins une barre principale configurée pour s'étendre transversalement et de manière perpendiculaire au-dessus des rails lors de son emploi pour le fauchage d'une voie ferrée. La barre principale peut être assimilée à une poutre porteuse dont l'âme s'étend selon une direction transversale, perpendiculaire à la direction des rails, une fois le système installé. Ladite barre peut en outre présenter un profilé en forme de I dans sa section transversale, et comprend une extrémité inférieure et une extrémité supérieure délimitant la hauteur de la poutre selon un axe vertical.

On définit au sens de l'invention, par « surface ferroviaire », toute surface sur laquelle reposent les rails, cela peut inclure les voies ou les portions de voies comprenant des ballasts et/ou des dalles par exemple, ainsi le terme « surface ferroviaire s'étend aux surfaces ferroviaires ballastées ou dallées ou encore toute autre surface ferroviaire susceptible d'être utilisée pour supporter des rails.

On définit par « zone centrale » la zone s'étendant entre les deux rails d'une voie ferrée, cette zone correspond à une zone inter-rail correspondant à la zone intérieure située entre les deux rails de ladite voie ferrée.

On définit par « zone latérale » les zones situées de part et d'autre le long de la zone centrale, cette zone correspond aux zones latérales situées à l'extérieur des rails de ladite voie ferrée.

Le système de fauchage selon l'invention permet ainsi non seulement le fauchage entre les rails mais aussi à l'extérieur des rails sur une largeur correspondant à la surface ferroviaire de la voie ferrée. Lorsque le système est employé au-dessus des rails, la barre principale est agencée transversalement au-dessus des rails et présente ainsi deux extrémités configurées pour s'étendre au-dessus desdites zones latérales.

Selon l'invention, le système comprend des moyens de détection de la surface ferroviaire et des obstacles présents sur la voie ferrée. A ce titre, le système peut être doté d'un ou plusieurs capteurs pour détecter les obstacles et la surface ferroviaire. Lesdits moyens de détection peuvent être agencés directement sur la barre ou sur les éléments de coupe, ou encore sur une structure annexe placée devant ladite barre ou encore à l'avant d'un véhicule équipé d'une telle barre. Ainsi le système de fauchage peut comprendre un ou plusieurs capteurs tels qu'un profilomètre, un système de télédétection par laser en deux ou trois dimensions connu sous l'acronyme anglais « LiDAR 2D » ou « LiDAR 3D », une caméra mono/stéréo, un sonar, un radar etc... ou tout autre système équivalent pouvant servir à la détection d'obstacles présents sur la voie ferrée. Lesdits moyens de détection permettent ainsi d'acquérir des données relatives à la topographie, au relief, à la présence d'obstacles présents sur la voie ferrée ou encore à la hauteur ou à la densité de la végétation présente ladite voie.

Le système selon l'invention comprend une pluralité d'éléments de coupe motorisés. Lesdits éléments de coupe présentent un corps principal et une tête de coupe comprenant un organe de coupe, lesdits éléments de coupe sont agencés perpendiculairement le long de la direction de la barre principale correspondant à la direction transversale lorsque le système est employé au-dessus des rails. Par élément de coupe motorisé, on entend au sens de l'invention que chaque élément de coupe est relié mécaniquement ou par connexion électrique à au moins un moteur. Ledit moteur permet de fournir l'énergie nécessaire pour le fauchage et peut être piloté par une unité de commande.

Afin de procéder à un fauchage plus fin, les éléments de coupe sont disposés sur la barre principale de manière à s'étendre au-dessus de la zone centrale et des zones latérales de la voie ferrée lorsque le système de fauchage est employé. Cette disposition permet avantageusement de traiter en simultané la zone centrale et les zones latérales de la voie ferrée.

Chacun des éléments de coupe du système comprend une tête de coupe agencée de manière à être en vis-à-vis de la surface ferroviaire à traiter lors de l'emploi dudit système. Chaque tête de coupe comprend ainsi un organe de coupe agencé à son extrémité.

Le système comprend en outre une pluralité d'éléments de coupe motorisés, chaque organe de coupe étant relié mécaniquement à un élément de coupe motorisé, lesdits éléments de coupe motorisés étant agencés chacun perpendiculairement le long de la barre principale.

Les éléments de coupes motorisés de l'invention sont agencés le long de la barre principale et autorisent un déplacement variable en hauteur des têtes de coupe et par conséquent des organes de coupes agencés à l'extrémité de ces dernières.

Les organes de coupes sont donc susceptibles de translater par rapport à la direction de la barre principale. De manière préférentielle, chacun des éléments de coupe est agencé perpendiculairement le long de ladite barre principale.

En outre, l'invention permet d'agencer une pluralité d'organes de coupe sur une seule et même barre, dite barre principale, ce qui facilite l'entretien et la maintenance du système de fauchage par un opérateur. En effet, ce dernier pourrait simplement démonter la barre avec l'ensemble des organes de coupes plutôt que de vérifier un à un les éléments coupants répartis sur les bogies d'un train équipé d'un dispositif de l'art antérieur.

Par « montés mobiles en translation verticale » on entend, au sens de l'invention que chaque élément de coupe comprend au moins une partie mobile configurée pour effectuer un tel mouvement par rapport à la direction de la barre principale.

Le système selon l'invention comprend également une unité de commande configurée pour ajuster la hauteur de coupe de chaque organe de coupe en fonction de la surface ferroviaire et des obstacles présents sur la voie ferrée. Ladite unité de commande peut comprendre des modules de contrôle reliés aux moyens de détection du système de fauchage. En outre, l'invention peut comprendre une pluralité d'unités de commande permettant d'analyser et de traiter les données acquises par les moyens de détection et/ou les différents capteurs. L'unité de commande permet de commander l'ajustement et/ou le réglage de la hauteur des têtes de coupe des éléments de coupe dudit système de fauchage en fonction des données issues des moyens de détection et des obstacles détectés sur la portion de voie ferrée environnante. En outre, l'unité de commande permet de définir une hauteur de coupe en fonction des données acquises par les moyens de détection ou des données issues d'une base de données externes ou historisées. Ladite unité est ainsi configurée pour ajuster la hauteur des organes de coupe en fonction des obstacles détectés par les moyens de détection.

L'unité de commande peut également contrôler la vitesse de coupe de l'organe de coupe du système. Ledit système peut également être contrôlé à distance notamment via une interface homme-machine. En outre, l'unité de commande peut permettre de contrôler la vitesse de rotation d'un moteur de l'élément de coupe entre différents régimes de fonctionnement. Le système selon l'invention peut alors bénéficier d'une puissance de fauchage variable au besoin.

Ainsi et selon l'invention, la hauteur de chacun des organes de coupe peut être ajustée de manière indépendante en fonction des données issues des moyens de détection, lesdites données étant analysées et traitées par l'unité de commande. En outre, le fait de disposer d'une pluralité d'éléments de coupe le long de la barre principale permet un fauchage plus près du ballast et plus fin autour des obstacles susceptibles d'être rencontrés et pouvant se présenter entre les rails ou sur leurs côtés tout en assurant un fauchage simultané des différentes zones de la voie ferrée.

Avantageusement et selon l'invention, le système comprend pour au moins un élément de coupe, de préférence pour chaque élément de coupe :
- une partie fixe solidaire d'au moins une portion de la barre principale, ladite partie fixe présentant une extrémité inférieure et une extrémité supérieure verticalement opposées,
- une partie mobile montée mobile en translation verticale par rapport à ladite partie fixe, entre une position, dite position déployée, dans laquelle la partie mobile se trouve dans une position adjacente à l'extrémité inférieure de la partie fixe, et une position, dite position retractée, dans laquelle la partie mobile se trouve dans une position adjacente à l'extrémité supérieure de ladite partie fixe.

Selon ce mode de réalisation, la partie fixe peut être assimilée à tout ou partie du corps principal de l'élément de coupe, ledit corps étant au moins en partie solidaire de ladite barre principale.

La partie mobile peut quant à elle être assimilée à tout élément ou partie du système de fauchage susceptible d'effectuer un mouvement de translation.

Dans une variante préférée, la partie mobile comprend un organe de coupe.

Ainsi et selon l'invention, la partie mobile est agencée entre deux extrémités fixes de l'élément de coupe permettant de délimiter la course en translation verticale de ladite partie mobile.

Avantageusement et selon l'invention, le système comprend en outre, pour au moins un élément de coupe, de préférence pour chaque élément de coupe, un actionneur configuré pour assurer la translation verticale de la partie mobile par rapport à la partie fixe de l'élément de coupe.

Les actionneurs susceptibles d'être utilisés peuvent être des actionneurs électriques, pneumatiques et/ou hydrauliques. Lesdits actionneurs peuvent être choisis parmi un vérin, un ensemble crémaillère ou vis sans fin et roue motorisée, ou encore tout autre actionneur connu de l'homme du métier. Les actionneurs sont commandés par l'unité de commande qui permet de commander le maintien en position et/ou la mise en mouvement de l'actionneur.

Ainsi et selon l'invention, l'actionneur permet de translater verticalement tous les éléments lui étant liés dans ce mouvement ainsi que d'assurer le maintien en position à l'emplacement désiré.

Avantageusement et selon l'invention, au moins un élément de coupe, de préférence chaque élément de coupe, comprend un arbre de transmission solidaire en translation verticale de ladite partie mobile, ledit arbre présentant une partie proximale agencée dans l'axe vertical dudit élément de coupe et une partie distale comprenant un organe de coupe.

Selon ce mode de réalisation, l'arbre de transmission est agencé verticalement dans l'axe de l'élément de coupe et est solidaire de la partie mobile.

L'arbre de transmission du système de fauchage est configuré pour effectuer un mouvement de rotation selon l'axe vertical de l'élément de coupe et un mouvement de translation vertical.

Ainsi et selon l'invention, l'arbre de transmission permet d'une part de transmettre l'énergie mécanique de rotation d'un moteur de l'élément de coupe à l'organe de coupe situé à sa partie distale, et d'autre part, d'assurer la liaison avec l'actionneur et la partie mobile.

Avantageusement et selon l'invention, le système comprend en outre, pour au moins un élément de coupe, de préférence pour chaque élément de coupe, un groupe d'entrainement en rotation dudit arbre de transmission reliant mécaniquement la partie fixe et la partie mobile de l'élément de coupe, ledit groupe étant configuré pour permettre la rotation de l'arbre de transmission indépendamment de sa position verticale.

Par position verticale de l'arbre de transmission on entend une position assimilable à celle de la partie mobile de l'élément de coupe, ledit arbre étant solidaire en translation de ladite partie mobile.

Avantageusement et selon l'invention, le groupe d'entrainement comprend, pour au moins un élément de coupe, de préférence pour chaque élément de coupe :
- un élément de transmission déformable configuré pour transmettre le couple d'au moins un moteur à l'arbre de transmission vertical ;
- un ensemble de pignons d'entrainement relié mécaniquement à au moins un moteur, ledit ensemble étant configuré pour entrainer en rotation l'élément de transmission déformable, ledit ensemble étant agencé sur les extrémités inférieures et supérieures de la partie fixe de l'élément de coupe;
- un ensemble de pignons entrainés par ledit élément de transmission déformable, ledit ensemble étant agencé sur la partie mobile et solidaire en translation verticale de ladite partie mobile par rapport à la partie fixe de l'élément de coupe ;
- au moins un engrenage à renvoi d'angle solidaire en rotation et en translation dudit ensemble de pignons entrainés, ledit engrenage étant également solidaire en translation de l'arbre de transmission dudit élément de coupe.

Dans un mode de réalisation préféré, l'ensemble de pignons d'entrainement comprend a minima quatre pignons d'entrainement agencés par paire sur chacune des extrémités supérieure et inférieure de la partie fixe d'un élément de coupe.

Les pignons d'entrainement fournissent l'énergie mécanique à l'élément de transmission et peuvent être reliés à un ou plusieurs moteurs.

L'élément de transmission déformable peut être un élément de transmission souple, tel qu'une courroie synchronisée ou non ou encore une chaîne.

Ainsi et selon l'invention, le parcours d'entrainement de l'élément de transmission déformable et le renvoi du mouvement par le couplage mécanique des engrenages à renvoi d'angle sur l'arbre de transmission permet à la partie mobile de translater verticalement sans qu'il soit nécessaire de déplacer le ou les moteurs fournissant le couple à l'organe de coupe de l'élément de coupe, le système peut ainsi gagner en compacité et en poids avec une répartition des éléments d'entrainements plutôt que de disposer d'un moteur unique pour la pluralité d'éléments de coupe.

Avantageusement et selon l'invention, la partie fixe d'au moins un élément de coupe, de préférence chaque élément de coupe, comprend des moyens de guidage en translation verticale de la partie mobile par rapport à la partie fixe.

De manière préférentielle, les moyens de guidage sont formés par deux barres verticales sur lesquelles vient coulisser la partie mobile. Dans ce mode de réalisation la partie mobile est un boitier coulissant comprenant des moyens permettant le coulissement dudit boitier.

Ainsi et selon l'invention, les moyens de guidage permettent d'assurer un mouvement de la partie mobile lors de la translation verticale.

Avantageusement et selon l'invention, le système comprend en outre une batterie d'alimentation électrique reliée électriquement à la pluralité d'éléments de coupe.

Ainsi et selon l'invention, le système selon l'invention peut être alimenté de manière autonome au besoin, sans dépendre de l'énergie d'un véhicule.

Avantageusement et selon l'invention, le système selon l'invention comprend un carter de protection agencé sur la barre principale ou sur chaque tête de coupe.

Ainsi et selon l'invention, le système bénéficie d'une protection supplémentaire visant à prévenir les projections vers les usagers ou les objets environnants lors de l'emploi du système.

Avantageusement et selon l'invention, la pluralité d'éléments de coupe du système comprend une liaison pivot ou une liaison rotule agencée sur la partie distale de l'arbre de transmission entre la barre principale et l'organe de coupe.

En outre, l'invention prévoit également un système comprenant une articulation située sur la partie distale de l'arbre de transmission. Une telle articulation peut être choisie parmi un moyen de réglage en position angulaire et et/ou d'un élément de transmission de puissance angulaire tel qu'un joint de cardan ou d' Oldham par exemple.

Ainsi et selon l'invention, les têtes de coupes peuvent bénéficier de degrés de libertés supplémentaires dont la rotation est commandable durant le fonctionnement.

L'invention concerne également un véhicule d'entretien d'une portion de voie ferrée présentant une direction longitudinale correspondant au sens de déplacement dudit véhicule sur ladite portion de voie ferrée, ledit véhicule étant caractérisé en ce qu'il comprend un système de fauchage robotisé selon tout ou partie des caractéristiques précédentes, ledit système étant asservi à l'avance du véhicule sur la voie ferrée.

L'invention concerne également un procédé de contrôle de la hauteur de coupe d'une pluralité d'organes de coupe d'un système de fauchage selon tout ou partie des caractéristiques précédentes, pour le fauchage robotisé de la végétation présente sur au moins une portion d'une voie ferrée présentant des rails agencés sur une surface ferroviaire, ladite voie présentant en outre une zone centrale s'étendant entre les rails et deux zones latérales agencées de part d'autre des rails le long de ladite zone centrale, ledit procédé étant caractérisé en ce qu'il comprend :
- une étape d'acquisition de la topographie de la zone centrale et des zones latérales de la voie ferrée ;
- une étape de détection des obstacles présents sur ladite voie ferrée à partir du traitement des données acquises;
- une étape de détermination d'une hauteur de coupe de chaque organe de coupe en fonction des données précédentes ;
- une étape d'ajustement de la hauteur de coupe de chacun des organes de coupe à partir de la hauteur déterminée en fonction de la topographie de ladite portion de voie ferrée et des obstacles présents sur ladite voie.

On entend, au sens de l'invention que l'étape d'acquisition de la topographie est une étape permettant d' acquérir les données relatives au relief et à la topographie du sol y compris les données relatives à la présence de la végétation, notamment les données de la hauteur et de la densité des végétaux présents.

### Liste des figures

D'autres buts, caractéristiques et avantages de l'invention apparaîtront à la lecture de la description suivante donnée à titre uniquement non limitatif et qui se réfère aux figures annexées dans lesquelles :
- [Fig.1] est une vue schématique en coupe transversale de la disposition des éléments de coupe sur la barre principale du système de fauchage selon un mode de réalisation de l'invention.
- [Fig.2] est une vue détaillée d'un élément de coupe faisant apparaître le détail du groupe d'entrainement selon un mode de réalisation de l'invention, l'élément de coupe étant dans une position neutre.
- [Fig.3] est une vue schématique de l'emploi du système de fauchage selon un mode de réalisation de l'invention sur une voie ferrée.
- [Fig.4] est un schéma simplifié représentant un mode de réalisation du système de fauchage en présence d'obstacles sur une voie ferrée.

### Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, les éléments identiques, similaires ou analogues sont désignés par les mêmes références sur toutes les figures.

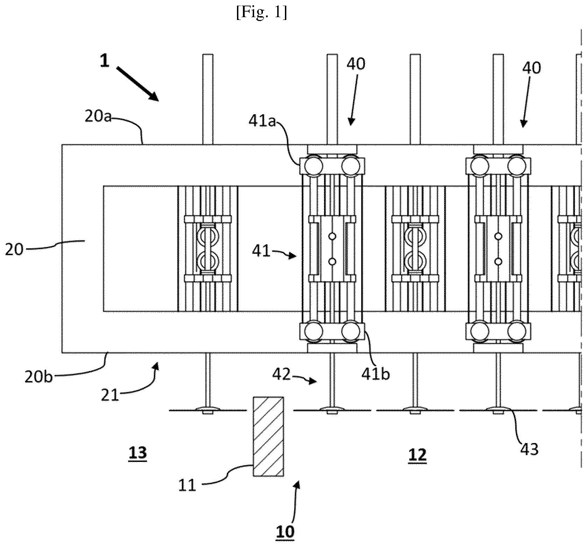

Les figures 1, 3 et 4 représentent un système 1 de fauchage de la végétation présente sur une voie ferrée selon un mode de réalisation de l'invention dans lequel la barre principale 20 comprend une pluralité d'éléments de coupe 40 agencés sur ladite barre 20. Les éléments de coupe 40 sont agencés de part et d'autre sur la barre 20 le long de la direction de ladite barre 20 qui correspond à la direction transversale lorsque celle-ci est employée perpendiculairement au-dessus des rails 11 de la voie ferrée 10.

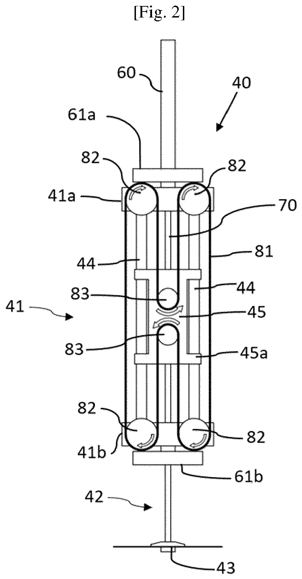

La figure 2 représente un élément de coupe du système selon un mode de réalisation préféré de l'invention comprenant le groupe d'entrainement avec parcours en forme de « H » de l'élément de transmission déformable 81.

Le système de fauchage 1 comprend une pluralité d'éléments de coupe motorisés 40 s'étendant chacun perpendiculairement à la barre 20 et étant répartis le long de la barre principale 20. Lesdits éléments de coupe 40 sont solidaires de ladite barre principale 20 et présentent un corps principal 41 ainsi qu'une tête de coupe 42 dont l'extrémité comprend un organe de coupe 43. Le corps principal 41 des éléments de coupe motorisés 40 présente une forme sensiblement parallélépipédique et est agencé à la verticale selon la hauteur de la barre principale de manière à ce que la tête de coupe 42 et notamment l'organe de coupe 43, soit positionné en direction de la voie ferrée 10. La tête de coupe 42 et l'organe de coupe 43 sont montés mobiles en translation verticale, correspondant à un mouvement perpendiculaire à la direction de la barre principale 20 de manière à pouvoir faire varier la hauteur de coupe du système.

Dans un mode de réalisation, le corps principal 41 d'un élément de coupe 40 s'étend sensiblement sur toute la hauteur de la barre principale 20. Chacun des éléments de coupe 40 est monté perpendiculairement sur la barre principale 20. Les éléments de coupe 40 sont répartis le long de ladite barre 20 et comprennent une partie mobile configurée pour effectuer un mouvement de translation vertical perpendiculaire à la direction de ladite barre principale 20. Plus précisément, le corps principal 41 comprend une partie fixe et une partie mobile agencée dans l'axe vertical de l'élément de coupe 40. Ladite partie fixe du corps principal 41 de l'élément de coupe 40 comprend une extrémité supérieure 41a et une extrémité inférieure 41b, lesdites extrémités 41a et 41b étant verticalement opposées selon l'axe vertical de l'élément de coupe 40. La partie mobile de l'élément de coupe 40 correspond à un ensemble susceptible d'être entrainé dans un mouvement de translation vertical par rapport à la partie fixe. La partie mobile comprend un boîtier mobile 45 configuré pour coulisser verticalement sur les deux barres de guidage 44. A cet effet, le boîtier 45 peut comprendre des prises 45a conformées aux barres de guidage. De cette façon, lorsque ledit boîtier 45 effectue un mouvement de translation vertical, ce dernier peut coulisser selon ce mouvement le long desdites barres 44.

Les barres de guidage 44 s'étendent selon la hauteur du corps principal 41 des éléments de coupe 40 du système 1 de fauchage. Lesdites barres de guidage 44 sont respectivement solidaires de l'extrémité supérieure 41a et de l'extrémité inférieure 41b du corps principal 41. Les extrémités 41a et 41b définissent ainsi la course verticale du boîtier mobile 45. La partie fixe de l'élément de coupe 40 comprend ainsi les barres de guidage 44 et les extrémités 41a et 41b du corps principal 41 des éléments de coupe 40. En outre, chaque élément de coupe motorisé 40 est solidaire d'au moins une portion de la barre principale 20, préférentiellement chaque élément de coupe comprend un corps principal 41 dont les extrémités 41a et 41b sont solidaires de la barre principale 20 du système 1 de fauchage.

Les éléments de coupe motorisés 40 du système de fauchage comprennent un groupe d'entrainement configuré pour transmettre le couple moteur à l'organe de coupe 43 agencé à l'extrémité de la tête de coupe 42 et solidaire de celle-ci. Le groupe d'entrainement relie la partie fixe et la partie mobile de l'élément de coupe 40 via un élément de transmission déformable 81. La tête de coupe 42 correspond à la partie distale de l'arbre de transmission 70, dont l'axe vertical correspond à l'axe de l'élément de coupe 40.

L'arbre de transmission 70 comprend une partie, dite partie proximale agencée de manière verticale dans le corps principal 41 de l'élément de coupe 40. L'arbre 70 comprend également une partie, dite partie distale, qui correspond à une portion de l'arbre se trouvant en sortie de l'extrémité inférieure 41b du corps principal 41. L'arbre de transmission 70 est agencé selon l'axe vertical de l'élément de coupe 40 et est également solidaire en translation vertical avec le boîtier mobile 45 de la partie mobile de l'élément de coupe 40. Les extrémités 41a et 41b du corps principal 41 des éléments de coupe 40 comprennent respectivement un alésage axial conformé au diamètre de l'arbre de transmission 70.

Afin de transmettre le mouvement de rotation nécessaire à l'organe de coupe 43, le groupe d'entrainement du système 1 de fauchage comprend un élément de transmission déformable 81 entrainé par un ensemble de pignons d'entrainement 82 reliés mécaniquement à au moins un moteur de l'élément de coupe motorisé 40, ledit moteur pouvant être agencé sur la partie fixe de l'élément de coupe 40. L'ensemble des pignons d'entrainement 82 est lié en rotation audit moteur et fournit ainsi l'énergie mécanique à l'élément de transmission déformable. L'élément de transmission 81 relie la partie fixe à la partie mobile de l'élément de coupe 40. En effet, l'élément de transmission 81 ainsi agencé entraîne la rotation d'un ensemble de pignons entrainés 83 agencés sur le boitier mobile 45 de l'élément de coupe 40. Les pignons entrainés 83 sont ainsi solidaires en translation verticale par rapport à la partie fixe de l'élément de coupe motorisé 40. L'ensemble de pignons entrainés 83 permet alors d'entrainer en rotation un ou plusieurs engrenages à renvoi d'angle situés dans le boitier 45. Lesdits engrenages à renvoi d'angle sont ainsi solidaires en translation et peuvent transmettre l'énergie mécanique de rotation à d'autres engrenages solidaires en rotation avec l'arbre de transmission 70 sur lequel est fixé l'organe de coupe 43. Au sens de l'invention, le groupe d'entraînement comprend l'élément de transmission 81, l'ensemble de pignons 82, l'ensemble de pignons entrainés 83 ainsi que les différents engrenages à renvoi d'angle nécessaire pour transmettre le mouvement de rotation à l'arbre final de transmission 70.

La partie mobile de l'élément de coupe 40 correspond à un ensemble susceptible de translater verticalement par rapport à la partie fixe, cet ensemble comprend ainsi le boitier 45, les pignons entrainés 83, l'arbre de transmission 70 ainsi que les différents engrenages à renvoi d'angles solidaires en rotation et en translation avec ledit arbre 70. La partie mobile comprend ainsi la tête de coupe 42 et l'organe de coupe 43.

Le mouvement de translation vertical peut être effectué à l'aide d'un actionneur 60 pouvant être un vérin hydraulique. Pour ce faire, l'actionneur 60 est relié à l'arbre de transmission 70 au niveau de l'extrémité supérieure 41a de l'élément de coupe motorisé 40. L'actionneur 60 est relié mécaniquement et/ou électriquement à divers éléments permettant d'assurer les liaisons cinématiques et les reprises d'efforts souhaitées lors du mouvement de translation et du maintien en position.

Le système de fauchage 1 comprend également des moyens 30 de détection des obstacles et de la surface ferroviaire de la voie ferrée 10.

Lesdits moyens de détection 30 peuvent être agencés directement sur la barre principale 20, sur la partie fixe de l'élément de coupe 40, ou encore sur une structure annexe à ladite barre principale 20, à l'avance de ladite barre 20 sur une voie ferrée 10. Lesdits moyens 30 peuvent en outre comprendre plusieurs modules susceptibles de transmettre des données à une unité de commande 50.

Lors de l'emploi du système 1 de fauchage robotisé, la barre principale s'étend de manière perpendiculaire à la direction des rails 11 de la voie ferrée 10 de manière à ce que la pluralité d'éléments de coupe 40 présente des têtes de coupe 42 en vis-à-vis de la surface ferroviaire de la voie 10. Si au cours du désherbage et lors de la progression du système sur ladite voie, un obstacle ou une irrégularité sont détectés par les moyens de détection 30, le système selon l'invention va pouvoir faire translater verticalement la partie mobile des éléments de coupe 40 et par conséquent la tête de coupe 42.

Les moyens de détection selon l'invention peuvent détecter et établir les données topographiques de la surface ferroviaire lors de la progression du système de fauchage sur la voie ferrée 10 et par conséquent détecter les obstacles potentiellement présents sur ladite voie.

Ainsi lorsqu'un obstacle est détecté, les données issues des moyens de détection 30 sont traitées par au moins une unité de commande 50 configurée pour analyser lesdites données et déterminer une hauteur de coupe pour chaque élément de coupe 40 de la barre principale 20. Avantageusement, l'unité de commande 50 permet de déterminer une hauteur de coupe propre à chaque élément de coupe présent sur la barre principale ce qui permet ainsi au système de progresser dans le désherbage de la voie 10 tout en évitant d'abîmer les têtes de coupe 42 des éléments de coupe 40 arrivant à hauteur dudit obstacle ou encore les obstacles eux-mêmes qui peuvent être des éléments de sécurité agencés sur la voie et qui doivent également être préservés.

L'unité de commande 50 permet ainsi d'ajuster la hauteur de chacun des éléments de coupe en fonction de la topographie et des obstacles présents sur la voie ferrée. Ladite unité de commande 50 permet ainsi aux actionneurs 60 de translater verticalement l'arbre de transmission 70 de chaque élément de coupe entre une position, dite position déployée, selon laquelle le boitier mobile 45 vient en butée contre l'extrémité inférieure 41b du corps principal 41 d'un élément de coupe 40, et entre une position, dite position retractée, selon laquelle le boitier mobile 45 vient en butée contre l'extrémité supérieure 41a de l'élément de coupe 40. Nonobstant, le système selon l'invention peut également prévoir des moyens de maintien de la position de chacun des éléments de coupe 40, comme par exemple le maintien dans une des positions intermédiaires comprises entre ladite position retractée et ladite position déployée. Ces moyens de maintien de la position peuvent être compris dans l'actionneur 60 ou encore être agencés sur la partie fixe d'un élément de coupe 40.

L'unité de commande 50 peut également être configurée pour commander la vitesse de rotation des moteurs des éléments de coupe 40. Dans ce cas, l'unité de commande 50 peut piloter la vitesse ou le couple appliqué à l'organe de coupe 43 et le système peut comprendre des capteurs de vitesse et divers éléments de contrôle des moteurs.

Bien que robotisé, le système de fauchage peut être contrôlé manuellement par un utilisateur à distance via une interface homme-ordinateur par exemple.

En outre, le système de fauchage peut être relié à des capteurs de mouvement et/ou de position et/ou de vitesse, afin d'acquérir des informations nécessaires pour un fonctionnement plus précis, comme des moyens de géolocalisation permettant de géolocaliser en temps réel le système sur la voie.

En outre, le système selon l'invention peut fonctionner avec ou sans cartographie préétablie pouvant indiquer ou recenser les obstacles à éviter. D'autres informations comme l'abscisse curviligne de la voie à désherber peuvent être utilisées lorsque le système est disposé sur un véhicule ferroviaire par exemple.

Lorsque la barre principale 20 est implantée sur un véhicule ferroviaire, un asservissement de l'avance du véhicule à l'état de la barre peut être envisagé. Par exemple, si la végétation est très dense et que les moyens de détection 30 arrivent difficilement à repérer le sol, un premier passage peut être réalisé en plaçant les têtes de coupe 42 à une hauteur assez importante pour ne pas engendrer de dégâts sur les éléments de coupe 40. Une fois ce premier fauchage réalisé, la marche arrière du véhicule peut être commandée, et un deuxième passage permet ainsi une meilleure lecture de la surface ferroviaire par les moyens de détection.

La figure 1 représente une coupe transversale d'un système de fauchage selon un mode de réalisation de l'invention où la barre principale 20 est assimilable à une poutre présentant une âme ajourée le long de sa direction longitudinale. L'âme ajourée est située entre la portion supérieure 20a et la portion inférieure 20b de la barre principale 20. Ce mode de réalisation permet de bénéficier d'une barre 20 plus légère et plus pratique à manipuler.

Sur cette figure, les éléments de coupe motorisés 40 sont agencés alternativement et perpendiculairement sur la barre 20. Chacun des éléments de coupe 40 comprend un corps principal 41 de forme sensiblement parallélépipédique solidaire de la poutre 20 en ses extrémités supérieure 41a et inférieure 41b.

Le système de fauchage est agencé au-dessus d'une voie ferrée 10 comprenant une zone centrale 12 et une zone latérale 13, lesdites zones étant séparées par un rail 11. La poutre 20 comprend en outre une extrémité latérale 21 agencée au-dessus de la zone latérale 13. De cette manière le système comprend des éléments de coupe motorisés 40 susceptibles de couvrir l'ensemble de la surface ferroviaire de la voie ferrée 10.

La figure 2 représente le détail d'un élément de coupe motorisé 40 selon un mode de réalisation de l'invention. Selon cette variante, au moins une des extrémités 41a ou 41b du corps principal comprend un moteur en prise mécanique avec l'un des pignons d'entrainement 82. L'ensemble des pignons 82 comprend quatre pignons d'entrainement 82, répartis par paire sur chacune des extrémités 41a et 41b. La partie mobile en translation verticale de l'élément de coupe 40 est assimilée au boitier 45 qui comprend un ensemble de pignons entrainés 83 agencés selon l'axe vertical de l'élément de coupe 40. L'ensemble de pignons entrainés comprend, dans cette variante, deux pignons entrainés agencés sur l'axe vertical du boitier mobile 45. L'élément de transmission déformable 81 est une courroie reliant l'ensemble des pignons d'entrainement 82 avec l'ensemble des pignons entrainés 83. Le boîtier mobile 45 comprend un système d'engrenage à renvoi d'angle lié en rotation à l'ensemble 83 mais également lié en translation verticale avec un arbre de transmission 70 agencé dans l'axe vertical du corps principal 41 de l'élément de coupe 40. La tête de coupe 42 correspond à la partie distale de l'arbre de transmission 70, et débouche de l'extrémité inférieure 41b du corps principal 41. Ladite tête comprend un organe de coupe 43 fixé à son extrémité distale.

Dans cette configuration, l'actionneur 60, l'arbre de transmission 70 et tous les éléments qui lui sont liés partagent le même axe vertical, à savoir l'axe de l'élément de coupe 40.

Le corps principal 41 comprend en outre une extrémité 41a dans laquelle un alésage axial est conformé au diamètre de l'actionneur 60 solidaire de l'élément de coupe 40.

L'actionneur 60 est agencé axialement à chaque élément de coupe 40 et comprend deux bagues de guidage 61a et 61b respectivement situées à l'extérieur du corps principal 41 au niveau de ses extrémités 41a et 41b. L'actionneur présenté sur cette figure est un vérin hydraulique.

En outre, un élément de coupe 40 tel que représenté à la figure 2 comprend deux barres de guidages 44 s'étendant verticalement et parallèlement l'une de l'autre dans le corps principal 41, chacune des barres 44 reliant de part et d'autre une extrémité 41a et une extrémité 41b dudit corps principal 41. Le boitier mobile 45 comprend quatre prises 45a présentant un alésage conformé au diamètre des barres de guidages 44 de manière à autoriser le coulissement en translation vertical de la partie mobile de l'élément de coupe 40 lors de l'actionnement du vérin.

L'élément de coupe 40 présente un parcours d'entrainement de la courroie en forme de « H » permettant de translater verticalement la partie mobile sans qu'il soit nécessaire de déplacer le ou les moteurs fournissant le couple à l'arbre de transmission 70.

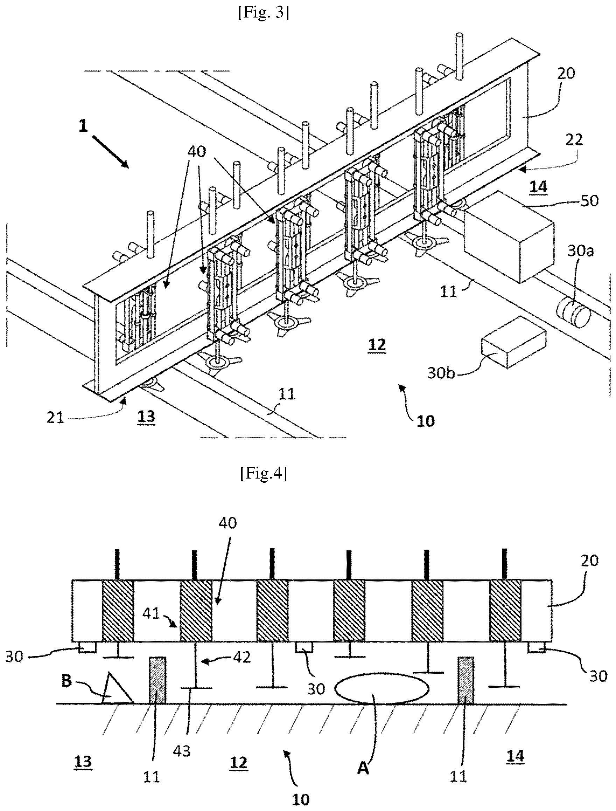

La figure 3 est vue d'ensemble du système 1 de fauchage selon un mode de réalisation de l'invention où figurent schématiquement une unité de contrôle 50 ainsi que des moyens de détection 30 comprenant les modules 30a et 30b.

L'unité de contrôle et les modules 30a et 30b peuvent être agencés directement sur la barre principale 20 ou encore sur une structure annexe.

La barre principale 20 est une poutre présentant un profilé en forme de « I » s'étendant transversalement au-dessus de la voie ferrée 10. Chacune des extrémités 21 et 22 de la barre principale 20 s'étend respectivement au-dessus des zones latérales 13 et 14 de la voie 10 et comprend un élément de coupe motorisé 40 selon la figure 2. Le système 1 selon ce mode de réalisation comprend neuf éléments de coupe 40 disposés alternativement le long de la barre principale 20. Le système de fauchage assure ainsi un traitement optimal pour le désherbage de la zone centrale 12 et des zones latérales 13 et 14.

La figure 4 est une vue schématique illustrant la gestion des obstacles lors de l'utilisation d'un système de fauchage selon un mode de réalisation de l'invention.

Selon cette variante, la voie 10 comprend un obstacle A et un obstacle B. L'obstacle A se trouve sur la zone centrale 12 et l'obstacle B se trouve sur la zone latérale 13. Sur ce schéma, les moyens de détection 30 sont agencés sur la barre principale 20 et l'unité de commande 50 ajuste la hauteur de coupe de chacun des éléments de coupe 40 en fonction de la présence des obstacles sur la voie 10.

## Revendications

1. Système (1) de fauchage robotisé de la végétation présente sur au moins une portion d'une voie ferrée (10) présentant des rails (11) agencés sur une surface ferroviaire, ladite voie 10 présentant en outre une zone centrale (12) s'étendant entre les rails 11 et deux zones latérales (13,14) agencées de part et d'autre des rails (11) le long de ladite zone centrale (12), ledit système (1) étant **caractérisé en ce qu'**il comprend :
- au moins une barre principale (20) s'étendant transversalement au-dessus de la zone centrale (12) de la voie ferrée (10), une fois le système (1) agencé au-dessus des rails (11), et comprenant deux extrémités configurées pour s'étendre au-dessus des zones latérales (13,14) de ladite voie ferrée (10) ;
- des moyens de détection (30) de la surface ferroviaire et des obstacles présents sur la voie ferrée (10) ;
- une pluralité d'organes de coupe (43) montés chacun mobile en translation par rapport à ladite barre principale (20), ladite pluralité d'organes de coupe (43) étant répartie le long de ladite barre (20) ;
- une unité de commande (50) configurée pour ajuster la hauteur de coupe de chaque organe de coupe (43) par rapport à la surface ferroviaire et en fonction des obstacles présents sur ladite portion de voie ferrée (10) et détectés par lesdits moyens de détection (30).

2. Système selon la revendication 1, **caractérisé en ce qu'**il comprend en outre une pluralité d'éléments de coupe motorisés (40), chaque organe de coupe (43) étant relié mécaniquement à un élément de coupe motorisé (40), lesdits éléments de coupe motorisés (40) étant agencés chacun perpendiculairement le long de la barre principale (20).

3. Système de fauchage selon la revendication 2, **caractérisé en ce qu'**au moins un élément de coupe (40) - de préférence chaque élément de coupe (40) - comprend :
- une partie fixe solidaire d'au moins une portion de la barre principale (20), ladite partie fixe présentant une extrémité inférieure et une extrémité supérieure verticalement opposées,
- une partie mobile montée mobile en translation verticale par rapport à ladite partie fixe, entre une position, dite position déployée, dans laquelle la partie mobile se trouve dans une position adjacente à l'extrémité inférieure de la partie fixe, et une position, dite position retractée, dans laquelle la partie mobile se trouve dans une position adjacente à l'extrémité supérieure de ladite partie fixe.

4. Système selon la revendication 3, **caractérisé en ce qu'**il comprend en outre, pour au moins un élément de coupe (40) - de préférence pour chaque élément de coupe (40) - un actionneur (60) configuré pour assurer la translation verticale de la partie mobile par rapport à la partie fixe de l'élément de coupe (40).

5. Système selon la revendication 4, **caractérisé en ce qu'**il comprend en outre, pour au moins un élément de coupe (40) - de préférence pour chaque élément de coupe (40) - un arbre de transmission (70) solidaire en translation verticale de ladite partie mobile, ledit arbre présentant une partie proximale agencée dans l'axe vertical dudit élément de coupe et une partie distale comprenant un organe de coupe (43).

6. Système selon la revendication 5, **caractérisé en ce qu'**il comprend en outre, pour au moins un élément de coupe (40) - de préférence pour chaque élément de coupe (40) - un groupe d'entrainement en rotation dudit arbre de transmission (70) reliant mécaniquement la partie fixe et la partie mobile de l'élément de coupe (40), ledit groupe étant configuré pour permettre la rotation de l'arbre de transmission (70) indépendamment de sa position verticale.

7. Système selon la revendication 6, **caractérisé en ce que**, pour au moins un élément de coupe (40) - de préférence pour chaque élément de coupe (40) - le groupe d'entrainement comprend :
- un élément de transmission déformable (81) configuré pour transmettre le couple d'au moins un moteur à l'arbre de transmission (70) ;
- un ensemble de pignons d'entrainement (82) relié mécaniquement à au moins un moteur, ledit ensemble étant configuré pour entrainer en rotation l'élément de transmission déformable (81), ledit ensemble étant agencé sur les extrémités inférieures et supérieures de la partie fixe de l'élément de coupe (40) ;
- un ensemble de pignons entrainés (83) par ledit élément de transmission déformable (81), ledit ensemble étant agencé sur la partie mobile et solidaire en translation verticale de ladite partie mobile par rapport à la partie fixe de l'élément de coupe (40) ;
- au moins un engrenage à renvoi d'angle solidaire en rotation et en translation dudit ensemble de pignons entrainés (83), ledit engrenage étant également solidaire en translation de l'arbre de transmission (70) dudit élément de coupe (40).

8. Système selon la revendication 7, **caractérisé en ce que**, pour au moins un élément de coupe (40) - de préférence pour chaque élément de coupe (40) - la partie fixe de l'élément de coupe comprend des moyens de guidage en translation verticale de la partie mobile par rapport à ladite partie fixe.

9. Système selon l'une des revendications précédentes, caractérisé en qu'il comprend en outre une batterie d'alimentation électrique reliée électriquement à la pluralité d'éléments de coupe (40).

10. Système selon l'une des revendications précédentes, caractérisé en qu'il comprend en outre un carter de protection agencé sur la barre principale (20) ou sur l'élément de coupe (40).

11. Système selon l'une des revendications précédentes, **caractérisé en ce que** la pluralité d'éléments de coupe (40) comprend une liaison pivot ou une liaison rotule agencée sur la partie distale de l'arbre de transmission (70), entre la barre principale (20) et l'organe de coupe (43).

12. Véhicule d'entretien d'une portion de voie ferrée (10) présentant une direction longitudinale correspondant au sens de déplacement dudit véhicule sur ladite portion de voie ferrée (10), ledit véhicule étant **caractérisé en ce qu'**il comprend un système de fauchage robotisé selon l'une des revendications 1 à 11 asservi à l'avance du véhicule sur la voie ferrée (10).

13. Procédé de contrôle de la hauteur de coupe d'une pluralité d'organes de coupe (43) d'un système de fauchage selon l'une des revendications 1 à 11, pour le fauchage robotisé de la végétation présente sur au moins une portion d'une voie ferrée (10) présentant des rails (11) agencés sur une surface ferroviaire, ladite voie présentant en outre une zone centrale (12) s'étendant entre les rails (11) et deux zones latérales (13,14) agencées de part d'autre des rails (11) le long de ladite zone centrale (12), ledit procédé étant **caractérisé en ce qu'**il comprend :
- une étape d'acquisition des données de la topographie de la zone centrale (12) et des zones latérales (13,14) de la voie ferrée ;
- une étape de détection des obstacles présents sur ladite portion de voie ferrée (10) à partir du traitement desdites données acquises ;
- une étape de détermination d'une hauteur de coupe de chaque organe de coupe (43) en fonction des données traitées précédentes ;
- une étape d'ajustement de la hauteur de coupe à partir de la hauteur déterminée de chacun des organes de coupe (43) en fonction de la topographie de ladite portion de voie ferrée (10) et des obstacles présents sur ladite voie (10).
